# EUROPÄISCHE PATENTSCHRIFT

(11) **EP 4 583 988 B1**
(45) Veröffentlichungstag und Bekanntmachung des Hinweises auf die Patenterteilung: **04.11.2026**
(21) Anmeldenummer: 23771805.1
(22) Anmeldetag: 08.09.2023
(51) Int. Cl.: A63B 5/11, G01L 1/14, G01B 7/16, G01D 5/241, G01L 1/20, A63B 21/055, A63B 24/00, A63B 71/06

(54) **SPRUNGMATTENANORDNUNG**
JUMPING MAT ARRANGEMENT
AGENCEMENT DE TAPIS DE SAUT

(30) Priorität: 08.09.2022 DE 102022122870
(43) Veröffentlichungstag der Anmeldung: 16.07.2025
(73) Patentinhaber: bellicon AG, 6005 Luzern (CH); Fraunhofer-Gesellschaft zur Förderung der angewandten Forschung e.V., 80686 München (DE)
(72) Erfinder: STÜBING, Julian, 80686 München (DE); KOPF, Günter, 77971 Kippenheim (DE)
(74) Vertreter: Rätsch, Caroline
(86) Internationale Anmeldenummer: PCT/EP2023/074781
(87) Internationale Veröffentlichungsnummer: WO 2024/052554

(56) Entgegenhaltungen:
- EP-B1- 2 404 148
- WO-A1-2014/204323
- WO-A1-2015/003211
- CN-U- 212 756 959
- JP-A- 2021 037 168
- US-A1- 2014 155 786
- US-A1- 2018 303 383
- US-B2- 7 572 206

## Beschreibung

Die Erfindung betrifft eine Sprungmattenanordnung für ein Trampolin, mit einer Sprungmatte, die eine Oberseite und eine Unterseite aufweist, und mit einer Sensoranordnung zur Erfassung von Informationen bei einer Benutzung der Sprungmatte.

Die Erfindung ist gerichtet auf jegliche Art von Trampolinen wie zum Beispiel Fitnesstrampoline oder Gartentrampoline. Derartige Trampoline weisen einen umlaufenden Rahmen und eine Sprungmatte auf, die über Federelemente innerhalb des Rahmens gespannt ist. Bei den Federelementen handelt es sich beispielsweise um metallische Spiralfedern oder gummielastische Seilabschnitte, insbesondere Seilringe. Die Sprungmatte ist flexibel ausgebildet und gestattet dem Benutzer ein weiches Schwingen oder Springen auf der Oberseite der Sprungmatte. Der umlaufende Rahmen wird zum Beispiel über Beine in Abstand zum Boden gehalten, die an dem Rahmen befestigt sind.

Derartige Trampoline sind bekannt und haben sind bewährt. Es bestand im Stand der Technik jedoch das Bedürfnis, zusätzliche Informationen über die Benutzung des Trampolins zu erhalten. Aus der Praxis ist ein Sprungzähler bekannt, der die Anzahl der getätigten Sprünge zählt. Hierbei kommt beispielsweise ein Kontaktsensor mit einer leitfähigen Metallkugel zum Einsatz, die bei jedem Sprung durch Kontaktierung eine elektronische Flanke erzeugt. Jede Flanke entspricht einem Sprung.

Aus der EP 2 962 736 B1 ist ein Trampolin mit Sensoren bekannt, mit denen auf das Sprungtuch einwirkende Kräfte oder Beschleunigungen erfasst werden. Die Sensoren sind an der Unterseite der Beine angeordnet, so dass das Trampolin vollständig auf den Sensoren steht.

Aus der EP 2 934 704 B1 ist ein Trampolin mit Beschleunigungssensoren bekannt, die paarweise um die Sprungmatte herum angeordnet sind. Die Sensoren definieren einen Koordinatenraum. Hierdurch kann die Sprungzone des springenden Benutzers des Trampolins bestimmt werden.

Aus der CN 212 756 959 U ist ein multifunktionales Trampolin bekannt, bei dem mehrere Drucksensoren an der Unterseite oder im Inneren einer flexiblen Matte angeordnet sind. Die Drucksensoren können in einer Anordnung, beispielsweise kreuzförmig, angeordnet sein und dienen dazu, den Druck eines Benutzers an unterschiedlichen Positionen der flexiblen Matte zu erfassen.

Die bekannten Sensorsysteme sind ungenau.

Der Erfindung liegt die Aufgabe zugrunde, ein Trampolin mit einer Sensoranordnung zu schaffen, das eine höhere Ortsauflösung ermöglicht.

Diese Aufgabe wird durch eine Sprungmattenanordnung mit den Merkmalen des Patentanspruchs 1 gelöst.

Erfindungsgemäß umfasst die Sensoranordnung erste Sensorleitungen und zweite Sensorleitungen, wobei die ersten Sensorleitungen und die zweiten Sensorleitungen Kreuzungspunkte bilden und mindestens im Bereich der Kreuzungspunkte voneinander isoliert sind. Zwischen den ersten Sensorleitungen und den zweiten Sensorleitungen ist eine flexible Zwischenschicht angeordnet, die sich über mehrere Kreuzungspunkte erstreckt und an der Sprungmatte befestigt ist. Vorzugsweise erstrecken sich die ersten und zweiten Sensorleitungen über die Sprungmatte. Die Kreuzungspunkte gestatten eine hohe Auflösung der Sensoranordnung. Hierdurch ist ortsgenau auflösbar, wo sich der Benutzer auf der Sprungmatte befindet. Zweckmäßig bilden die ersten und die zweiten Sensorleitungen eine Matrix, die einen Sprungbereich der Sprungmatte abdeckt, wobei Randbereiche der Sprungmatte ausgelassen werden können. Letztere werden nur selten besprungen und dienen teilweise zur Aufhängung der Sprungmatte an dem Rahmen des Trampolins.

Die ersten Sensorleitungen und die zweiten Sensorleitungen sind mindestens im Bereich der Kreuzungspunkte voneinander isoliert. In diesem Bereich findet also kein elektronischer Kontakt zwischen den Sensorleitungen statt. Die Kreuzungspunkte können einzeln isoliert sein. Einfacher ist es, wenn mehrere Kreuzungspunkte durch einen gemeinsamen Isolator isoliert sind, der flächig, insbesondere schichtartig ausgebildet sein kann, wie es nachfolgend noch näher ausgeführt wird.

Die Erfindung schafft vollkommen neue Anwendungsmöglichkeiten. Durch die digitale Abbildung bei der Benutzung des Trampolins ist es zum Beispiel möglich, Bewegungsabläufe (zum Beispiel Fußstellungen oder Sprungfrequenzen) vorzugeben und zu kontrollieren. Dies ermöglicht ein individuelles Training auf dem Trampolin. Auch vielseitige Spielmöglichkeiten sind gegeben. Schließlich gestattet die Digitalisierung auch eine Vernetzung mehrerer Trampoline, die Interaktionsmöglichkeiten schafft.

Vorzugsweise handelt es sich bei der Sensoranordnung um eine kapazitive Sensoranordnung. Die ersten Sensorleitungen bilden vorteilhaft Sendeleitungen und die zweiten Sensorleitungen Empfangsleitungen oder umgekehrt. Die ersten und die zweiten Sensorleitungen sind mit einer Auswerteeinheit verbunden, die einen Controller aufweist. Zusätzlich kann die Auswerteeinheit auch ein Anschlussfeld zum Anschluss der Sensorleitungen und/oder eine Stromversorgung umfassen. Den Controller wird man beispielsweise auf einer Platine anordnen. Auch das Anschlussfeld kann auf der Platine angeordnet sein, wobei dann vorzugsweise vorgesehen ist, dass der Controller mit dem Anschlussfeld über Leiterbahnen konnektiert ist. Schließlich kann die Auswerteeinheit auch eine Schnittstelle für einen Auswerterechner der vom Controller gelieferten Daten aufweisen.

Bei einem Messvorgang gehen von der Sendeleitung zur Empfangsleitung in festen zeitlichen Abständen Feldlinien aus, die bei der Annäherung des Fußes (oder eines anderen Körperteils) abgelenkt werden. Die Stärke der Ablenkung wird durch den Controller und eine Software proportional in einen Abstand des angenäherten Mediums umgewandelt. Dieses berührungslose Messprinzip ist z.B. von Touch-Screens oder kapazitiven Näherungssensoren bekannt.

Bei der Benutzung des Trampolins wird die Sprungmatte verformt. Hierzu ist die Sprungmatte flexibel ausgebildet. Bei der Benutzung des Trampolins werden die ersten und zweiten Sensorleitungen zusammen mit der Sprungmatte ausgelenkt. Die Auslenkung kann auch einen Dehnungsanteil enthalten. In diesem Zusammenhang wird in Weiterbildung der Erfindung vorgeschlagen, dass die ersten und die zweiten Sensorleitungen jeweils in einer Haupt-Erstreckungsrichtung verlaufen, wobei sie in Richtung der Haupt-Erstreckungsrichtung alternierend seitlich verspringen. Die Sensorleitungen verlaufen also nicht linear, sondern verspringen seitlich, beispielsweise in einer Zick-Zack-Form oder meanderförmig. Durch das Verspringen erhalten die Sensorleitungen - und damit die gesamte Sensoranordnung - einerseits eine verbesserte Flexibilität. Andererseits erhöht sich auch die Sensorfläche. Dies gilt insbesondere dann, wenn die Sensorleitungen in der Ebene der Sprungmatte oder einer Ebene parallel zu der Sprungmatte verspringen, wie es als vorteilhaft angesehen wird. Die Sprungmatte weist eine Oberseite und eine Unterseite auf. Auf der Oberseite springt oder schwingt der Benutzer des Trampolins. Die Oberseite wird also im besonderen Maße belastet bzw. beansprucht. Ein vorteilhaftes Ausführungsbeispiel ist dadurch gekennzeichnet, dass die ersten Sensorleitungen und die zweiten Sensorleitungen auf der Unterseite verlaufen. Hierdurch sind sie vor einer mechanischen Überbeanspruchung geschützt. Eine derartige Sensoranordnung weist eine hohe Lebensdauer auf.

Erfindungsgemäß ist zwischen den ersten Sensorleitungen und den zweiten Sensorleitungen eine flexible Zwischenschicht angeordnet. Bei der Zwischenschicht handelt es sich um eine Trägerschicht für die Sensorleitungen, die vorzugsweise auf der Zwischenschicht befestigt, insbesondere aufgenäht, sind. Die Zwischenschicht ist vorteilhaft elektrisch isolierend. Insoweit wird es als vorteilhaft angesehen, wenn sich die Zwischenschicht über mehrere, vorzugsweise über sämtliche Kreuzungspunkte, erstreckt. Damit erfüllt die Zwischenschicht zwei Aufgaben, nämlich zum einen eine Trägerfunktion und zum anderen eine Isolierfunktion. Vorstehend wurde bereits angesprochen, dass die Sensorleitungen vorteilhaft auf die Zwischenschicht aufgenäht sind.

Allerdings bietet die Zwischenschicht den Vorteil eines einfachen Herstellungsverfahrens sowie einen besonderen Schutz der Sensorleitungen. Dies gilt insbesondere dann, wenn die Zwischenschicht auf der Unterseite der Sprungmatte angeordnet ist, wie es als vorteilhaft betrachtet wird.

Sofern die Sensorleitungen aufgenäht werden, sind die Sensorleitungen zweckmäßig als leitfähige einzelne Fäden ausgebildet, die vernäht werden können. Derartige leitfähige Fäden sind bekannt.

Die Zwischenschicht ist flexibel ausgebildet. Hierdurch kann sie der Auslenkung der Sprungmatte folgen.

Bei einem bevorzugten Ausführungsbeispiel ist die Zwischenschicht elastisch ausgebildet. Die Zwischenschicht weist hierzu zweckmäßig einen Elastananteil auf. Sie ist besonders vorteilhaft in Richtung auf die Sprungmatte vorgespannt. Dies gilt insbesondere dann, wenn die Zwischenschicht (beispielsweise bei einer Vernähung) fest mit der Sprungmatte verbunden ist. Aber auch wenn die Zwischenschicht und die Sprungmatte lösbar verbunden sind, kann die Zwischenschicht zur Verringerung eines Durchhangs vorgespannt werden. Im Idealfall liegt die Zwischenschicht in der Ruhestellung der Sprungmatte, in der die Sprungmatte nicht belastet ist, flächig an der Sprungmatte an, wobei in der Praxis die Zwischenschicht aufgrund ihres Eigengewichts in der Regel einen gewissen Abstand zu der Sprungmatte aufweisen wird. Dieser Abstand wird so gering wie möglich gehalten, damit die Sprungmatte bereits bei einer geringen Auslenkung an der Zwischenschicht anliegt.

Bereits vorstehend wurde angesprochen, dass ein Verspringen der Sensorleitungen vorteilhaft ist. In diesem Zusammenhang hat es sich als herstellungstechnisch vorteilhaft erwiesen, dass die ersten Sensorleitungen und die zweiten Sensorleitungen in einem Zickzackstich auf der Zwischenschicht aufgenäht sind.

Vorteilhafterweise sind die ersten Sensorleitungen auf der einen Seite und die zweiten Sensorleitungen auf der anderen Seite der Zwischenschicht aufgebracht, insbesondere aufgenäht. Sofern die Sensorleitungen aufgenäht sind, wird als Unterfaden zweckmäßig ein nicht-leitfähiger Faden verwendet. Hierdurch wird sichergestellt, dass die ersten und die zweiten Sensorleitungen voneinander isoliert sind.

Die Zwischenschicht ist an der Sprungmatte befestigt. Hierdurch ist sie unmittelbar mit der Sprungmatte gekoppelt und bewegt sich bei einer Benutzung des Trampolins mit dieser mit. Beispielsweise ist die Zwischenschicht an der Sprungmatte festgenäht. Dann liegt ein fester Verbund vor. Alternativ sind die Sprungmatte und die Zwischenschicht lösbar miteinander verbunden. Hier kommt zum Beispiel eine Klettverbindung oder eine Verbindung mittels Druckknöpfen in Betracht. Eine lösbare Verbindung hat den Vorteil, dass die Zwischenschicht ausgetauscht oder nachgerüstet werden kann.

Die Zwischenschicht besteht bevorzugt aus einem textilen Material, kann aber auch aus anderen technischen Mischgeweben ausgebildet sein.

Bei einer vorteilhaften Ausführungsform ist die Zwischenschicht mindestens im Bereich des Umfangs der Sprungmatte mit dieser verbunden. Eine derartige Befestigung gestattet eine genaue Positionierung der Zwischenschicht in Bezug auf die Sprungmatte. Bei einem bevorzugten Ausführungsbeispiel ist die Zwischenschicht im Wesentlichen ausschließlich im Bereich des Umfangs befestigt. Im eigentlichen Sprungbereich ist dann im Wesentlichen keine Befestigung vorgesehen, wobei "im Wesentlichen" vorliegend bedeutet, dass die Zwischenschicht an einzelnen Punkten im Sprungbereich mit der Sprungmatte verbunden sein kann, um die Zwischenschicht mit der Sprungmatte zu koppeln.

Bei der sich aus den ersten und den zweiten Sensorleitungen ergebenden Matrix ist eine großflächige und gleichzeitig hoch auflösende Abdeckung der Sprungfläche wünschenswert. Als besonders vorteilhaft hat es sich erwiesen, dass die ersten Sensorleitungen und die zweiten Sensorleitungen jeweils in ihrer Haupt-Erstreckungsrichtung gekrümmt verlaufen. Durch die Krümmung kann die Sprungfläche vorteilhaft abgedeckt werden, falls die Sprungmatte rund ausgebildet ist. Dabei muss die Krümmung nicht unbedingt der Krümmung bzw. dem Radius der Sprungmatte entsprechen. Vielmehr reicht es auch bei den außen verlaufenden Sensorleitungen aus, wenn diese weniger stark gekrümmt sind als der Rand der Sprungmatte.

Eine vorteilhafte Ausführungsform ist dadurch gekennzeichnet, dass der Abstand benachbarter Kreuzungspunkte in radialer Richtung der Sprungmatte gesehen außen einen größeren Abstand aufweist als innen. Als besonders vorteilhaft wird es angesehen, wenn die Krümmung der ersten und/oder der zweiten Sensorleitungen zum Rand der Sprungmatte hin stärker wird. Eine derartige Matrix schafft eine größere Sensordichte im Hauptsprungbereich der Sprungmatte, um dort die Messgenauigkeit zu erhöhen. Im Umfangsbereich wird eine Sprungmatte eher weniger besprungen/belastet, so dass hier eine gröbere Sensormatrix ausreicht.

Wie bereits eingangs erwähnt, sind die ersten und die zweiten Sensorleitungen mit einer Auswerteeinheit verbunden. Dies bedeutet, dass vorteilhafterweise die Sensorleitungen in einem Anschlussfeld zusammenlaufen. Hierzu wird vorteilhaft vorgeschlagen, dass die ersten Sensorleitungen und/oder die zweiten Sensorleitungen im Randbereich der Sprungmattenanordnung entlang des Umfangs der Sprungmattenanordnung zu der Auswerteeinheit geführt sind. Die ersten und/oder die zweiten Sensorleitungen sind bevorzugt im Randbereich der Zwischenschicht zu der Auswerteeinheit geführt. Alternativ sind sie im Randbereich der Sprungmatte zu der Auswerteeinheit geführt.

Insbesondere wird es als vorteilhaft angesehen, wenn die ersten Sensorleitungen außerhalb der zweiten Sensorleitungen zu der Auswerteeinheit geführt sind oder umgekehrt. Auch wird es als vorteilhaft betrachtet, wenn die ersten Sensorleitungen zu der Auswerteeinheit hin oben auf der Zwischenschicht und die zweiten Sensorleitungen unten angeordnet sind oder umgekehrt. Dies gestattet eine alternierende Anschlussweise, beispielsweise bei einem zweiseitigen Anschlussfeld jeweils unten und oben.

Das Anschlussfeld weist vorzugsweise Anschlüsse zum Konnektieren der ersten und zweiten Sensorleitungen auf. Die Anschlüsse sind beispielsweise als Druckknöpfe ausgebildet, die eine lösbare Verbindung zwischen dem Controller und den Sensorleitungen schaffen, wie sie als vorteilhaft angesehen wird. Die Anschlüsse können auch als Steckverbinder ausgebildet sein, die vorteilhaft ebenfalls lösbar ausgebildet sind. Die lösbare Verbindung bietet die Möglichkeit, die Auswerteeinheit von der Sprungmattenanordnung zu lösen und beispielsweise zu reparieren, auszutauschen oder nachzurüsten. Alternativ sind die Sensorleitungen fest mit dem Anschlussfeld verbunden, beispielsweise verlötet. Eine derartige Konstruktion ist sehr kompakt.

Bei dem Anschluss der Sensorleitungen an das Anschlussfeld ist darauf zu achten, dass die Sensorleitungen in einem Bereich, in dem sie aufgrund der Bewegung der Sprungmatte aneinander geraten können, isoliert sind, so dass ein möglichst geringes Übersprechen benachbarter Sensorleitungen gewährleistet ist. Hierzu sind die Sensorleitungen vorzugsweise mit Silikon beschichtet, um einen mechanischen Schutz zu gewährleisten und das Übersprechen (NEXT) zu verringern.

Vorteilhafterweise ist die Auswerteeinheit an der Sprungmatte oder der Zwischenschicht befestigt. Als besonders vorteilhaft hat es sich hierbei erwiesen, die Auswerteeinheit im Umfangsbereich der Sprungmattenanordnung anzuordnen, und zwar zweckmäßig in einem Rand der Sprungmatte, der sich über Haken der Sprungmatte erstreckt. Sofern eine Zwischenschicht zum Einsatz kommt, wird die Auswerteeinheit vorzugsweise in einem Rand untergebracht, der radial außerhalb der Befestigung der Zwischenschicht an der Sprungmatte liegt.

Eine vorteilhafte Ausführungsform der Erfindung ist dadurch gekennzeichnet, dass die ersten Sensorleitungen jeweils erste Elektroden und die zweiten Sensorleitungen jeweils zweiten Elektroden bilden, dass die ersten Elektroden und die zweiten Elektroden im Bereich der Kreuzungspunkte durch eine Isolierung voneinander isoliert sind, und dass die ersten Elektroden und die zweiten Elektroden zusammen mit der Isolierung im Bereich der Kreuzungspunkte jeweils einen Sensor bilden. Jeder Sensor wird also gebildet durch eine erste Elektrode, die Isolierung und eine zweite Elektrode. Der Sensor ist vorzugsweise ein kapazitiver Sensor. Die ersten und die zweiten Sensorleitungen schaffen in den Kreuzungspunkten vorteilhaft ein Raster von einzelnen Sensoren. Wie bereits vorstehend ausgeführt, können die Kreuzungspunkte einzeln durch die Isolierung isoliert sein. Einfacher ist es, wenn mehrere Kreuzungspunkte durch eine gemeinsame Isolierung isoliert sind, die flächig, insbesondere schichtartig ausgebildet sein kann.

Im Folgenden wird die Erfindung anhand eines bevorzugten Ausführungsbeispiels im Zusammenhang mit der anhängenden Zeichnung näher erläutert. Die Zeichnung zeigt in:
- Figur 1: in einer schematischen Darstellung eine perspektivische Ansicht eines erfindungsgemäßen Trampolins;
- Figur 2: in einer schematischen Darstellung eine Ansicht des Trampolins nach Figur 1 von unten;
- Figur 3: in einer schematischen Darstellung eine erfindungsgemäße Sensoranordnung des Trampolins nach Figur 1 in Alleinstellung;
- Figur 4: in einer schematischen Darstellung eine Vergrößerung des Details D aus Figur 2; und
- Figur 5: in einer schematischen Darstellung eine Schnittansicht eines Ausschnitts des Trampolins nach Figur 1.

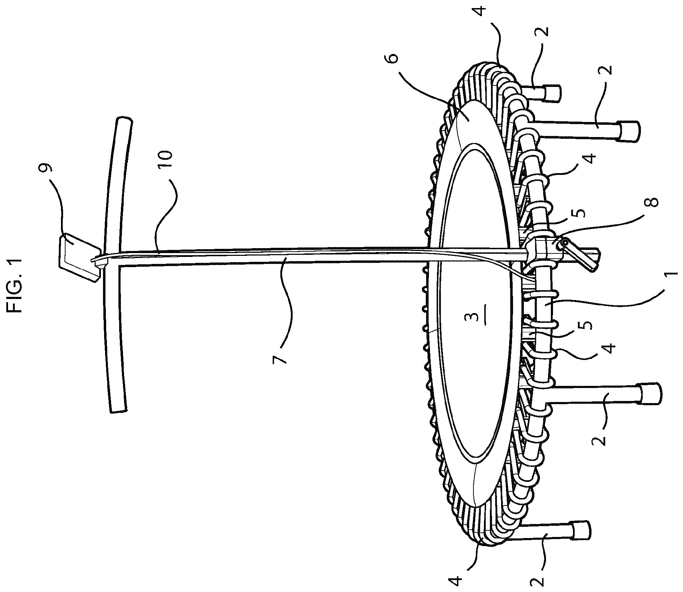

Figur 1 zeigt ein erfindungsgemäßes Trampolin mit einem umlaufenden Rahmen 1, von dem Beine 2 abgehen, die bei einem aufgestellten Trampolin vorzugsweise vertikal verlaufen. Auch andere Beine oder Beinanordnungen sind möglich. In dem Rahmen 1 ist eine Sprungmatte 3 über Seilringe 4 aufgespannt, die in Haken 5 eingehängt und um den Rahmen 1 herumgewunden sind. Die Haken 5 sind an der Sprungmatte 3 befestigt, beispielsweise vernäht. Ein derartiger Grundaufbau ist aus dem Stand der Technik bekannt. Alternative Befestigungsmöglichkeiten sind ebenfalls bekannt. Beispielsweise kann die Sprungmatte 3 mittels elastischer offener Seilabschnitte mit dem Rahmen verbunden sein, die ebenfalls in Haken eingehängt sind. Auch eine Aufhängung mittels Spiralfedern ist bekannt. Die Erfindung ist unabhängig von der Art der Aufhängung.

Die Sprungmatte 3 ist flexibel ausgebildet. Bei einer Belastung verformt sie sich entsprechend. Die Rückstellkräfte zur Spannung der Sprungmatte 3 werden im Wesentlichen durch die Seilringe 4 zur Verfügung gestellt.

Die Sprungmatte 3 weist einen Rand 6 auf, der umlaufend ausgebildet ist und sich vorzugsweise bis über die Haken 5 erstreckt. Vorteilhaft ist der Rand 6 gepolstert ausgebildet. Sofern der Nutzer des Trampolins also von der Sprungfläche abkommt und auf den Rand 6 tritt, wird der Kontakt (beispielsweise beim Springen) abgefedert. Zweckmäßig verläuft der Rand 6 außerhalb des durch die Haken 5 gespannten Sprungbereichs.

Mit dem Bezugszeichen 7 ist eine Haltestange gekennzeichnet, die über eine Aufnahme 8 mit dem Rahmen 1 verbunden sein kann. Über die Haltestange 7 sind bestimmte Übungen auf dem Trampolin leichter durchführbar, indem sich der Nutzer des Trampolins an der Haltestange festhält. Oben an der Haltestange 7 ist ein Display 9 angeordnet, über das Parameter des Benutzers wie beispielsweise die Schwingungsamplitude oder die Position des Nutzers ablesbar sind. Hierzu ist das Display 9 über ein Kabel 10 mit einer Auswerteeinheit verbunden, die nachfolgend noch näher beschrieben wird. Das Display 9 kann auch als Eingabeeinheit ausgebildet sein, über die Parameter eingegeben werden können wie beispielsweise eine gewünschte Abfolge von Sprüngen.

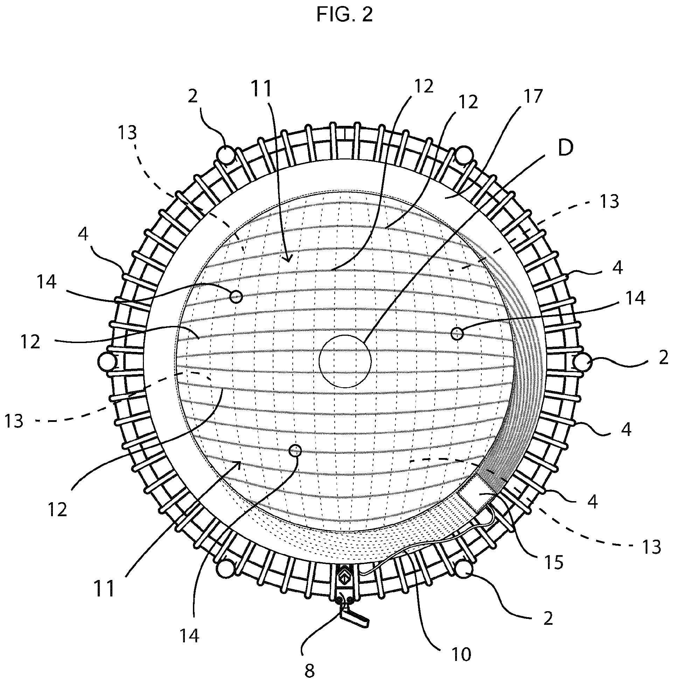

Figur 2 zeigt eine Ansicht des Trampolins nach Figur 1 von unten. Aus dieser Ansicht ist deutlich eine Sensoranordnung 11 zu sehen, die unterhalb der Sprungmatte 3 angeordnet ist und zur Erfassung von Informationen bei der Benutzung der Sprungmatte 3 dient. Beispielsweise ist die Sensoranordnung 11 mit der Sprungmatte 3 verbunden. Als besonders vorteilhaft wird es angesehen, wenn die Sensoranordnung 11 mit der Sprungmatte 3 lösbar verbunden ist. Dann kann sie nachgerüstet oder nur bei Bedarf eingesetzt werden. Beispielsweise ist die Sensoranordnung 11 mit der Sprungmatte 3 über eine Klettverbindung verbunden. Alternativ kommen Druckknöpfe in Betracht. Es reicht für eine funktionsgerechte Befestigung aus, wenn die Sensoranordnung 11 lediglich an einzelnen Punkten oder Bereichen mit der Sprungmatte 3 verbunden ist.

Die Sensoranordnung 11 weist erste Sensorleitungen 12 und zweite Sensorleitungen 13 auf, die Kreuzungspunkte 14 bilden. Aus Übersichtsgründen sind nur einige Kreuzungspunkte 14 in Figur 2 mit Bezugszeichen versehen.

Die Sensorleitungen 12, 13 sind mit einer Auswerteeinheit 15 verbunden und jeweils als Sende- und Empfangsleitungen ausgebildet. Dabei ist es unerheblich, ob die Sensorleitungen 12 Empfangsleitungen und die Sensorleitungen 13 Sendeleitungen sind oder umgekehrt. Wichtig ist, dass die Sensorleitungen 12 und die Sensorleitungen 13 im Bereich der Kreuzungspunkte 14 elektrisch isoliert voneinander sind. Im Bereich der Kreuzungspunkte 14 bildet die Sensoranordnung 11 kapazitive Messpunkte, die die Position einer Person erfassen und lokalisieren können.

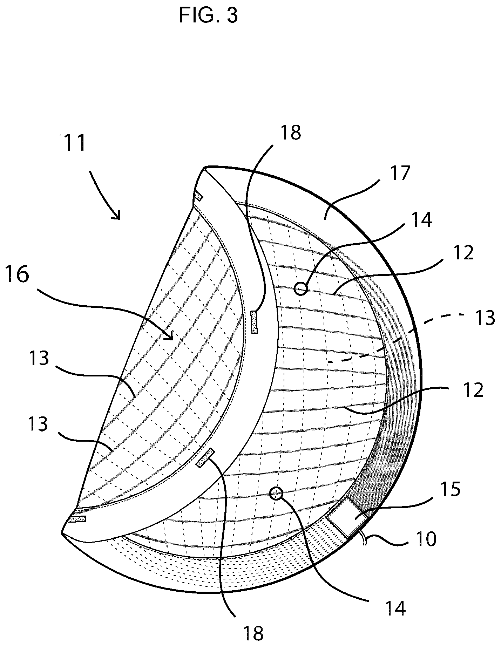

Die Isolierung kann beispielsweise durch Einzelisolierungen der Sensorleitungen 12, 13 im Bereich der Kreuzungspunkte 14 realisiert werden. Jeder Kreuzungspunkt 14 wird also einzeln isoliert. Herstellungstechnisch vorteilhaft ist die Isolierung der Sensorleitungen 12, 13 über eine größere Fläche, beispielsweise über mehrere Kreuzungspunkte 14. Vorliegend wird die Isolierung durch eine Zwischenschicht 16 zur Verfügung gestellt, wie sie im Zusammenhang mit Figur 3 noch näher erläutert wird.

Die ersten und die zweiten Sensorleitungen 12, 13 sind auf die Zwischenschicht 16 aufgenäht. Damit sich die Sensorleitungen 12, 13 nicht berühren, sind vorteilhaft die ersten Sensorleitungen 12 auf der einen Seite der Zwischenschicht 16 und die zweiten Sensorleitungen 13 auf der anderen Seite aufgenäht. Aus diesem Grund sind die zweiten Sensorleitungen 13 in Figur 2 strich-liniert dargestellt. Sie liegen auf der anderen Seite der Zwischenschicht, die vorteilhaft der Sprungmatte 3 zugewandt ist.

Vorzugsweise ist die Zwischenschicht 16 mit der Sprungmatte 3 verbunden, beispielsweise vernäht. Wie bereits zuvor erwähnt, kann auch eine lösbare Verbindung vorgesehen sein, wie es im Zusammenhang mit Figur 3 noch näher beschrieben wird.

Die ersten Sensorleitungen 12 und die zweiten Sensorleitungen 13 verlaufen also - bei einem Trampolin in der Benutzungsstellung - unterhalb der Sprungmatte 3. Hierdurch werden die Sensorleitungen 12, 13 geschützt.

Bei dem gezeigten vorteilhaften Ausführungsbeispiel des erfindungsgemäßen Trampolins verlaufen die ersten Sensorleitungen 12 und die zweiten Sensorleitungen 13 jeweils in ihrer Haupt-Erstreckungsrichtung gekrümmt. Dies hat den Vorteil, dass die Sensorleitungen 12, 13 auch besonders gut die Randbereiche der Sprungmatte 3 abdecken können. Die Haupt-Erstreckungsrichtung ist diejenige Richtung, in der sich die jeweilige Sensorleitung hauptsächlich erstreckt. Seitliche Versprünge, auf die nachfolgend noch näher eingegangen wird, beeinflussen die Haupt-Erstreckungsrichtung nicht.

Als besonders vorteilhaft wird es angesehen, dass der Abstand benachbarter Kreuzungspunkte 14 in radialer Richtung der Sprungmatte 3 außen größer sind als innen. Die Messdichte ist also im Zentrum der Sprungmatte 3 dichter als außen, da der Kontakt des Nutzers mit der Sprungmatte typischerweise eher im Zentrum stattfindet. In diesem Zusammenhang wird es als vorteilhaft angesehen, wenn die ersten Sensorleitungen 12 und/oder die zweiten Sensorleitungen 13 radial nach außen zum freien Ende der Sprungmatte 3 oder der Zwischenschicht 16 hin eine größere Krümmung aufweisen als die jeweiligen eher im Zentrum der Sprungmatte 3 oder der Zwischenschicht 16 befindlichen Sensorleitungen 12, 13.

Die Zwischenschicht 16 weist einen Rand 17 auf, der vorzugsweise umlaufend ausgebildet ist. Der Rand 17 befindet sich vorteilhaft außerhalb der Befestigung der Zwischenschicht 16 an der Sprungmatte 3. Vorzugsweise sind die ersten Sensorleitungen 12 und die zweiten Sensorleitungen 13 im Bereich des Randes 17 zu der Auswerteeinheit 15 geführt. Im Bereich des Randes 17 laufen die ersten Sensorleitungen 12 und die zweiten Sensorleitungen 13 zweckmäßig aufeinander zu. Dies ist platztechnisch vorteilhaft.

Figur 3 zeigt die Sensoranordnung 11 in Alleinstellung. Die Zwischenschicht 16 ist einseitig umgeklappt, so dass auch die auf der Oberseite verlaufenden zweiten Sensorleitungen 13 sichtbar sind. Es wurde vorstehend bereits angemerkt, dass die Sensoranordnung 11 vorteilhafterweise lösbar mit der Sprungmatte 3 verbunden werden kann. Dies ermöglicht eine Nachrüstung oder auch eine Anbringung ausschließlich bei Bedarf. Hierzu weist die Zwischenschicht 16 eine Klettverbindung 18 auf, die vorliegend mehrteilig ausgebildet ist. Die Verbindung mit der Sprungmatte 3 findet also nur an einzelnen Stellen statt. Die Klettverbindung ist in Figur 3 nur exemplarisch angedeutet. Sie kann auch radial weiter innen angeordnet sein oder zum Beispiel eine andere Form aufweisen. Auch eine Ausbildung als umlaufender Klettverbindungs-Ring ist möglich.

Wie bereits zuvor ausgeführt, sind die Sensorleitungen 12, 13 auf der Zwischenschicht 16 aufgenäht. Die Zwischenschicht 16 erfährt bei der Auslenkung der Sprungmatte 3 gleichermaßen eine Auslenkung. Die Zwischenschicht 16 muss also in hohem Maße flexibel und vorzugsweise auch elastisch sein. In diesem Zusammenhang hat es sich als besonders vorteilhaft erwiesen, wenn die ersten Sensorleitungen 12 und die zweiten Sensorleitungen 13 zu ihrer Haupt-Erstreckungsrichtung seitlich verspringen. Hierdurch kann die Zwischenschicht 16 gedehnt werden, ohne die Gefahr, dass die Sensorleitungen 12, 13 reißen.

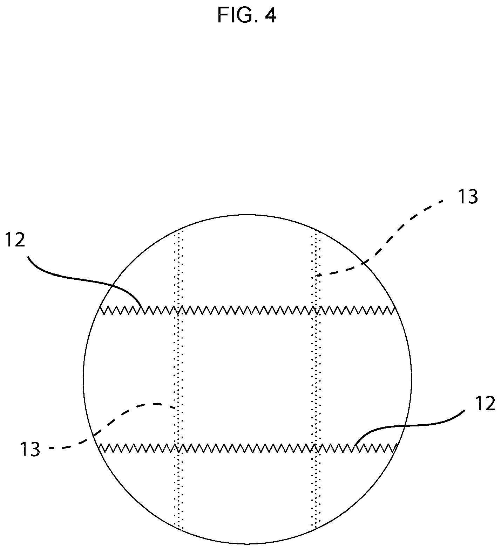

Figur 4 zeigt das Detail D aus Figur 2. Hieraus wird deutlich, dass die seitlichen Versprünge besonders vorteilhaft durch einen Zickzackstich realisiert werden können. Ein derartiger Zickzackstich ist auch insoweit vorteilhaft, als hierdurch die Sensorfläche erhöht wird.

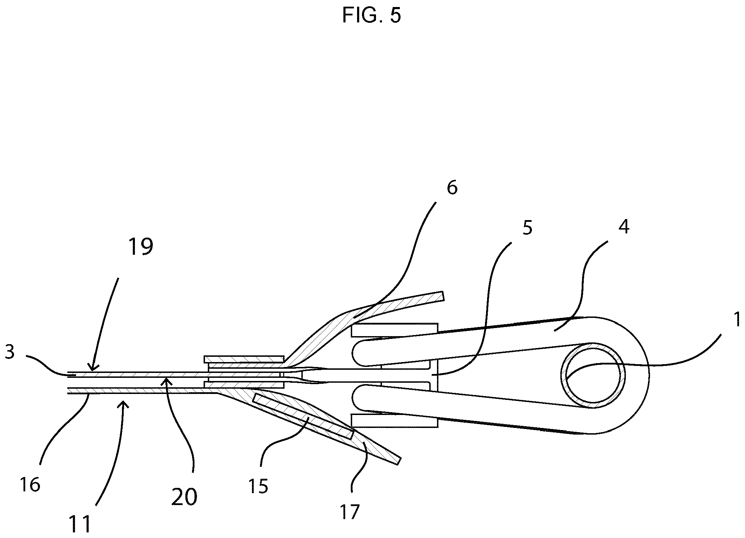

Figur 5 zeigt in einer abstrahierten Darstellung eine Schnittansicht durch den Randbereich der Sprungmatte 3 und der Sensoranordnung 11. Die Sprungmatte 3 ist mittels der Haken 5 und der Seilringe 4 innerhalb des umlaufenden Rahmens 1 aufgespannt. Der Rand 6 erstreckt sich über die Haken 5 und bietet dem Benutzer insoweit Schutz, falls er die eigentliche Sprungfläche nicht trifft. Dies gilt insbesondere dann, wenn der Rand 6 gepolstert ist, wie es als vorteilhaft angesehen wird.

Die Sprungmatte 3 weist eine Oberseite 19 und eine Unterseite 20 auf. Die Oberseite 19 befindet sich in der Benutzungsstellung des Trampolins oben. Die Zwischenschicht 16 ist an der Unterseite 20 der Sprungmatte 3 befestigt. Der Rand 17 der Zwischenschicht 16 erstreckt sich analog zu dem Rand 6 unter den Haken 5. Der Rand 17 ist vorteilhafterweise ebenfalls gepolstert. Die Auswerteeinheit 15 ist in dem Rand 17 aufgenommen. Die Polsterung schützt die Auswerteeinheit 15 vor eventueller Stoßbelastung beispielsweise bei einem Fehltritt des Benutzers.

### Bezugszeichenliste

- 1: Rahmen
- 2: Bein
- 3: Sprungmatte
- 4: Seilring
- 5: Haken
- 6: Rand
- 7: Haltestange
- 8: Aufnahme
- 9: Display
- 10: Kabel
- 11: Sensoranordnung
- 12: erste Sensorleitung
- 13: zweite Sensorleitung
- 14: Kreuzungspunkt
- 15: Auswerteeinheit
- 16: Zwischenschicht
- 17: Rand
- 18: Klettverbindung
- 19: Oberseite
- 20: Unterseite

## Patentansprüche

1. Sprungmattenanordnung für ein Trampolin, mit
- einer Sprungmatte (3), die eine Oberseite (19) und eine Unterseite (20) aufweist, und mit
- einer Sensoranordnung (11) zur Erfassung von Informationen bei einer Benutzung der Sprungmatte (3),
- wobei die Sensoranordnung (11) erste Sensorleitungen (12) und zweite Sensorleitungen (13) umfasst, wobei die ersten Sensorleitungen und die zweiten Sensorleitungen Kreuzungspunkte (14) bilden, und
- wobei die ersten Sensorleitungen (12) und die zweiten Sensorleitungen (13) mindestens im Bereich der Kreuzungspunkte (14) voneinander isoliert sind,
- wobei zwischen den ersten Sensorleitungen (12) und den zweiten Sensorleitungen (13) eine flexible Zwischenschicht (16) angeordnet ist, die sich über mehrere Kreuzungspunkte (14) erstreckt, und
- wobei die Zwischenschicht (16) an der Sprungmatte (3) befestigt ist.

2. Sprungmattenanordnung nach Anspruch 1, **dadurch gekennzeichnet, dass** die ersten Sensorleitungen (12) und die zweiten Sensorleitungen (13) jeweils in einer Haupt-Erstreckungsrichtung verlaufen, wobei sie in Richtung der Haupt-Erstreckungsrichtung alternierend seitlich verspringen.

3. Sprungmattenanordnung nach Anspruch 1 oder 2, **dadurch gekennzeichnet, dass** die ersten Sensorleitungen (12) und die zweiten Sensorleitungen (13) auf der Unterseite (20) der Sprungmatte (3) verlaufen.

4. Sprungmattenanordnung nach einem der Ansprüche 1 bis 3, **dadurch gekennzeichnet, dass** sich die flexible Zwischenschicht (16) über sämtliche Kreuzungspunkte (14) erstreckt.

5. Sprungmattenanordnung nach einem der Ansprüche 1 bis 4, **dadurch gekennzeichnet, dass** die ersten Sensorleitungen (12) und die zweiten Sensorleitungen (13) auf der Zwischenschicht (16) aufgenäht sind.

6. Sprungmattenanordnung nach einem der Ansprüche 1 bis 5, **dadurch gekennzeichnet, dass** die ersten Sensorleitungen (12) und die zweiten Sensorleitungen (13) in einem Zickzackstich auf der Zwischenschicht (16) aufgenäht sind.

7. Sprungmattenanordnung nach einem der Ansprüche 1 bis 6, **dadurch gekennzeichnet, dass** die ersten Sensorleitungen (12) auf einer Seite und die zweiten Sensorleitungen (13) auf der anderen Seite der Zwischenschicht (16) angeordnet sind.

8. Sprungmattenanordnung nach einem der Ansprüche 1 bis 7, **dadurch gekennzeichnet, dass** die Zwischenschicht (16) mindestens im Bereich des Umfangs der Sprungmatte (3) mit dieser verbunden ist.

9. Sprungmattenanordnung nach einem der Ansprüche 1 bis 8, **dadurch gekennzeichnet, dass** die ersten Sensorleitungen (12) und die zweiten Sensorleitungen (13) jeweils in ihrer Haupt-Erstreckungsrichtung gekrümmt verlaufen.

10. Sprungmattenanordnung nach einem der Ansprüche 1 bis 9, **dadurch gekennzeichnet, dass** der Abstand benachbarter Kreuzungspunkte (14) in radialer Richtung der Sprungmatte (3) gesehen außen größer ist als innen.

11. Sprungmattenanordnung nach einem der Ansprüche 1 bis 10, **dadurch gekennzeichnet, dass** die ersten Sensorleitungen (12) und/oder die zweiten Sensorleitungen (13) in einem Randbereich der Sprungmattenanordnung entlang des Umfangs der Sprungmattenanordnung zu einer Auswerteeinheit (15) geführt sind.

12. Sprungmattenanordnung nach einem der Ansprüche 1 bis 11, **dadurch gekennzeichnet, dass** die ersten Sensorleitungen (12) jeweils erste Elektroden und die zweiten Sensorleitungen (13) jeweils zweiten Elektroden bilden, dass die ersten Elektroden und die zweiten Elektroden im Bereich der Kreuzungspunkte (14) durch eine Isolierung voneinander isoliert sind, und dass die ersten Elektroden und die zweiten Elektroden zusammen mit der Isolierung im Bereich der Kreuzungspunkte (14) jeweils einen vorzugsweise kapazitiven Sensor bilden.

13. Trampolin mit einer Sprungmattenanordnung nach einem der Ansprüche 1 bis 12.

## Claims

1. Jumping mat arrangement for a trampoline, with
- a jumping mat (3), which has an upper side (19) and a lower side (20), and with
- a sensor arrangement (11) for acquiring information during use of the jumping mat (3),
- wherein the sensor arrangement (11) comprises first sensor lines (12) and second sensor lines (13), wherein the first sensor lines and the second sensor lines form crossing points (14), and
- wherein the first sensor lines (12) and the second sensor lines (13) are insulated from one another at least in the region of the crossing points (14),
- wherein a flexible intermediate layer (16), which extends over a plurality of the crossing points (14), is arranged between the first sensor lines (12) and the second sensor lines (13), and
- wherein the intermediate layer (16) is fastened to the jumping mat (3).

2. Jumping mat arrangement according to Claim 1, **characterized in that** the first sensor lines (12) and the second sensor lines (13) each run in a main direction of extent, wherein they deviate sideways in alternation in the direction of the main direction of extent.

3. Jumping mat arrangement according to Claim 1 or 2, **characterized in that** the first sensor lines (12) and the second sensor lines (13) run on the lower side (20) of the jumping mat (3).

4. Jumping mat arrangement according to one of Claims 1 to 3, **characterized in that** the flexible intermediate layer (16) extends over all of the crossing points (14).

5. Jumping mat arrangement according to one of Claims 1 to 4, **characterized in that** the first sensor lines (12) and the second sensor lines (13) are stitched onto the intermediate layer (16).

6. Jumping mat arrangement according to one of Claims 1 to 5, **characterized in that** the first sensor lines (12) and the second sensor lines (13) are stitched in a zigzag pattern onto the intermediate layer (16).

7. Jumping mat arrangement according to one of Claims 1 to 6, **characterized in that** the first sensor lines (12) are arranged on one side and the second sensor lines (13) on the other side of the intermediate layer (16).

8. Jumping mat arrangement according to one of Claims 1 to 7, **characterized in that** the intermediate layer (16) is connected to the jumping mat (3) at least in the region of the circumference of the latter.

9. Jumping mat arrangement according to one of Claims 1 to 8, **characterized in that** the first sensor lines (12) and the second sensor lines (13) are each curved in their main direction of extent.

10. Jumping mat arrangement according to one of Claims 1 to 9, **characterized in that** the spacing between adjacent crossing points (14), when viewed in the radial direction of the jumping mat (3), is greater on the outside than on the inside.

11. Jumping mat arrangement according to one of Claims 1 to 10, **characterized in that** the first sensor lines (12) and/or the second sensor lines (13) are routed to an evaluation unit (15) along the circumference of the jumping mat arrangement in a border region of the jumping mat arrangement.

12. Jumping mat arrangement according to one of Claims 1 to 11, **characterized in that** the first sensor lines (12) each form first electrodes, and the second sensor lines (13) each form second electrodes, **in that** the first electrodes and the second electrodes are insulated from one another by insulation in the region of the crossing points (14), and **in that** the first electrodes and the second electrodes, together with the insulation, each form a preferably capacitive sensor in the region of the crossing points (14).

13. Trampoline having a jumping mat arrangement according to one of Claims 1 to 12.

## Revendications

1. Ensemble tapis de saut pour un trampoline, avec
- un tapis de saut (3), qui comporte une face supérieure (19) et une face inférieure (20), et avec
- un ensemble de détection (11) destiné à détecter des informations lors d'une utilisation du tapis de saut (3),
- l'ensemble de détection (11) comprenant des premières lignes de détection (12) et des deuxièmes lignes de détection (13), les premières lignes de détection et les deuxièmes lignes de détection formant des points d'intersection (14), et
- les premières lignes de détection (12) et les deuxièmes lignes de détection (13) étant isolées l'une de l'autre au moins dans la zone des points d'intersection (14),
- une couche intermédiaire (16) flexible étant disposée entre les premières lignes de détection (12) et les deuxièmes lignes de détection (13), laquelle s'étend sur plusieurs points d'intersection (14), et
- la couche intermédiaire (16) étant fixée sur le tapis de saut (3).

2. Ensemble tapis de saut selon la revendication 1, **caractérisé en ce que** les premières lignes de détection (12) et les deuxièmes lignes de détection (13) s'étendent chacune dans une direction d'extension principale, en sautant latéralement en alternance dans la direction d'extension principale.

3. Ensemble tapis de saut selon la revendication 1 ou 2, **caractérisé en ce que** les premières lignes de détection (12) et les deuxièmes lignes de détection (13) s'étendent sur la face inférieure (20) du tapis de saut (3).

4. Ensemble tapis de saut selon l'une des revendications 1 à 3, **caractérisé en ce que** la couche intermédiaire (16) flexible s'étend sur tous les points d'intersection (14).

5. Ensemble tapis de saut selon l'une des revendications 1 à 4, **caractérisé en ce que** les premières lignes de détection (12) et les deuxièmes lignes de détection (13) sont cousues sur la couche intermédiaire (16).

6. Ensemble tapis de saut selon l'une des revendications 1 à 5, **caractérisé en ce que** les premières lignes de détection (12) et les deuxièmes lignes de détection (13) sont cousues en zigzag sur la couche intermédiaire (16).

7. Ensemble tapis de saut selon l'une des revendications 1 à 6, **caractérisé en ce que** les premières lignes de détection (12) sont disposées sur une face et les deuxièmes lignes de détection (13) sont disposées sur l'autre face de la couche intermédiaire (16).

8. Ensemble tapis de saut selon l'une des revendications 1 à 7, **caractérisé en ce que** la couche intermédiaire (16) est reliée au moins dans la zone de la périphérie du tapis de saut (3) à celui-ci.

9. Ensemble tapis de saut selon l'une des revendications 1 à 8, **caractérisé en ce que** les premières lignes de détection (12) et les deuxièmes lignes de détection (13) sont courbées chacune dans leur direction d'extension principale.

10. Ensemble tapis de saut selon l'une des revendications 1 à 9, **caractérisé en ce que** la distance entre des points d'intersection (14) adjacents dans la direction radiale du tapis de saut (3) est plus grande à l'extérieur qu'à l'intérieur.

11. Ensemble tapis de saut selon l'une des revendications 1 à 10, **caractérisé en ce que** les premières lignes de détection (12) et/ou les deuxièmes lignes de détection (13) sont guidées dans une zone de bord de l'ensemble tapis de saut le long de la périphérie de l'ensemble tapis de saut jusqu'à une unité d'évaluation (15).

12. Ensemble tapis de saut selon l'une des revendications 1 à 11, **caractérisé en ce que** les premières lignes de détection (12) forment chacune des premières électrodes et les deuxièmes lignes de détection (13) forment chacune des deuxièmes électrodes, que les premières électrodes et les deuxièmes électrodes sont isolées les unes des autres par une isolation dans la zone des points d'intersection (14), et que les premières électrodes et les deuxièmes électrodes forment conjointement avec l'isolation dans la zone des points d'intersection (14) chacune un capteur de préférence capacitif.

13. Trampoline avec un ensemble tapis de saut selon l'une des revendications 1 à 12.
